# NEUE EUROPÄISCHE PATENTSCHRIFT

(11) **EP 2 803 579 B2**
(45) Veröffentlichungstag und Bekanntmachung des Hinweises auf die Entscheidung über den Einspruch: **06.11.2024**
(45) Hinweis auf die Patenterteilung: 23.03.2016
(21) Anmeldenummer: 14162189.6
(22) Anmeldetag: 28.03.2014
(51) Int. Cl.: B64D 11/06

(54) **Fluggastsitz mit einem Gestell**
Aircraft passenger seat with a frame
Siège d'avion pour passager avec châssis

(30) Priorität: 08.04.2013 DE 102013005859
(43) Veröffentlichungstag der Anmeldung: 19.11.2014
(73) Patentinhaber: ZIM Aircraft Seating GmbH, 88090 Immenstaad am Bodensee (DE)
(72) Erfinder: Angelika, Zimmermann, 88662 Überlingen (DE); Uwe, Salzer, 88048 Friedrichshafen (DE)
(74) Vertreter: Otten, Roth, Dobler & Partner mbB Patentanwälte

(56) Entgegenhaltungen:
- EP-A1- 1 331 130
- EP-A1- 1 938 713
- EP-A1- 1 938 713
- EP-A2- 1 988 017
- EP-B2- 0 850 834
- WO-A1-2007/128978
- DE-A1- 102010 033 752
- DE-A1- 4 222 222
- US-A- 4 526 421
- US-A- 5 560 681
- US-A- 5 961 073
- US-A1- 2005 012 375
- US-A1- 2010 140 999
- US-B2- 7 458 643
- Offenkundige Vorbenutzungen durch Lieferungen durch Recaro an Japan Airlines, Lufthansa Technik Logistik sowie an Airbus Operations GmbH

## Beschreibung

Die Erfindung betrifft einen Fluggastsitz mit einem Gestell nach dem Oberbegriff des Anspruchs 1.

### Stand der Technik

Fluggastsitze für Flugzeuge sind in unterschiedlichsten Ausführungsformen bekannt geworden. Ein wichtiger Aspekt bei der Konstruktion von Fluggastsitzen ist bei einer vorgegebenen Sitzanordnung in einer Flugkabine, dem Fluggast einen großen Bewegungsraum zu belassen.

### Aufgabe und Vorteile der Erfindung

Der Erfindung liegt die Aufgabe zugrunde, einen Fluggastsitz bereitzustellen, der bei einer vorgegebenen Sitzanordnung eine Vergrößerung des Bewegungsraums eines Fluggastes in Bezug zum darauffolgenden Fluggastsitz ermöglicht.

Diese Aufgabe wird durch die Merkmale des Anspruchs 1 gelöst. In den abhängigen Ansprüchen sind vorteilhafte und zweckmäßige Weiterbildungen der Erfindung angegeben.

Die Erfindung geht von einem Fluggastsitz mit einem Gestell aus, das zur Befestigung an einem Boden einer Flugkabine vorgesehen ist und einer über eine Drehachse am Gestell schwenkbar gelagerten Rückenlehne, wobei der Sitz einen Sitz-Referenz-Punkt (SRP) aufweist, dessen Position nach dem SAE International Aerospace Standard AS8049 definiert ist, siehe z.B. Dokument EP 1 331 130.

Der Kern der Erfindung liegt nun darin, dass die Drehachse der Rückenlehne in einer Linie parallel zum Kabinenboden und parallel zur Flugrichtung betrachtet einen Abstand von weniger als 40 mm vom Sitz-Referenz-Punkt (SRP) aufweist, für den Fall, dass die Drehachse 7 in Flugrichtung 10 betrachtet vor dem SRP liegt, und weniger als 5 mm vom Sitz-Referenzpunkt (SRP) aufweist, für den Fall, dass die Drehachse 7 in Flugrichtung 10 betrachtet hinter dem SRP liegt. Durch die Verkleinerung des Abstandes der Drehachse der Rückenlehne zum Sitz-Referenz-Punkt erhält die Rückenlehne in der Draufsicht betrachtet eine tiefere Wölbung, sodass ein Fluggast tiefer im Sitz sitzt, bei ansonsten insbesondere unveränderter Lage des Sitz-Referenz-Punkt. Damit hat ein Fluggast mehr Platz zum vorderen Sitz und hat damit eine größere Bewegungsfreiheit. Das Sitzgefühl wird angenehmer. Andererseits ist es möglich, durch diese kompaktere Bauweise des Fluggastsitzes bei unverändertem Platzangebot für einen Fluggast mehr Fluggastsitze in einer Flugkabine unterzubringen.

Zentraler Bezugspunkt ist der Sitz-Referenz-Punkt (SRP). Der SRP wird nach dem SAE International Aerospace Standard AS8049 definiert.

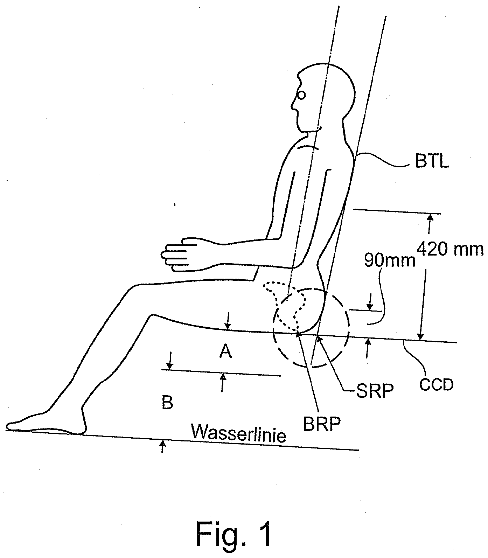

Der SRP ist der Schnittpunkt der eingedrückten Polster-Bezugshöhe CCD mit der Rückentangentenlinie eines Sitzes der mit einer Dummy-Person mit einem Gewicht von 75 bis 80 kg belastet ist (siehe Figur 1).

Die Rückentangentenlinie hat in Figur 1 das Bezugszeichen BTL. Nachfolgend wird eine gängige Methode zur Bestimmung des SRP mit Bezug auf Figur 1 beschrieben.

Die Methode heißt "Pin Method" oder übersetzt "Stiftmethode" und hat folgende in dem oben angegebenen Standard AS8049 sieben Schritte:
1. Setzen einer 75 bis 80 kg-Testperson oder eines fünfzigprozentigen männlichen anthropomorphischen Test-Dummys (ATD) auf einen Sitz nach Figur 1.
2. Lokalisieren und Kennzeichnen eines Punktes am Polster direkt unter einem Sitzbeinhöcker (der BRP).
3. Bohren eines Loches vertikal durch die Sitzschalenpolsterung und Struktur an diesem Punkt und Einsetzen eines Stiftes der Länge "A".
4. Platzieren der Testperson bzw. des Dummys auf dem Sitz und Messen von einer Bezugswasserlinie zu einem unteren Ende des Pins. Die Bezugswasserlinie ist zum Beispiel die Fußbodenwasserlinie bzw. der Flugzeugboden. Hierdurch ergibt sich die Höhe "B".
5. Die Addition der Höhe "B" und der Länge des Pins "A" ergibt die eingedrückte Polster-Bezugshöhe "CCD" von der Bezugswasserlinie.
6. Einsetzen von zwei runden Stäben waagrecht (auch bezogen parallel zum Flugzeugboden) zwischen dem Rücken der Testperson bzw. des Test-Dummys und der Sitzrückenpolsterung bei einer Höhe von 90 mm und 420 mm vertikal über der "CCD" und Bestimmen ihrer Position bei einer vertikalen Bezugshöhe.
7. Darstellen der zwei Positionen mit der CCD und Ermitteln des SRP an deren Schnittstelle (siehe Figur 1).

Gemäß dieser Definition des SRP ist es in einem Ausführungsbeispiel bevorzugt, wenn die Drehachse in Flugrichtung betrachtet vor dem SRP liegt. Dadurch lässt sich ein vergleichsweise großer Raumgewinn erzielen.

Ein vorteilhafter Raumgewinn kann immer noch dadurch erzielt werden, wenn die Drehachse in Flugrichtung betrachtet hinter dem SRP liegt.

Denkbar ist auch, dass die Drehachse durch den SRP hindurch geht.

Eine weitere Möglichkeit der Anordnung besteht darin, dass die Drehachse auf gleicher Höhe mit dem SRP liegt.

In einer außerdem bevorzugten Ausgestaltung der Erfindung beträgt die Ausbuchtung der Rückenlehne auf einer Ebene der Sitzfläche von einer seitlichen Berandung bis zur tiefsten Stelle mindestens 20 mm. Auf diese Weise ist es möglich, den Abstand zwischen SRP und Drehachse auf weniger als 40 mm zu verkleinern.

### Figurenbeschreibung

Weitere Vorteile und Merkmale der Erfindung sind anhand eines in den Figuren dargestellten erfindungsgemäßen Ausführungsbeispiels der Erfindung näher erläutert.

Im Einzelnen zeigt:
- Figur 1: eine schematische Darstellung mit einer Testperson zur Erläuterung der Definition des SRP aus dem Standard SAE AS8049,
- Figur 2: ein Fluggastsitz in schematischer Seitenansicht aus dem Stand der Technik bekannt mit einer darauf sitzenden schematisch dargestellten Testperson,
- Figur 3: einen Fluggastsitz in Seitenansicht gemäß der Erfindung mit einer darauf sitzenden schematisch dargestellten Testperson und
- Figur 4: den Fluggastsitz aus Figur 3 in einer Schnittansicht gemäß der Schnittlinie A-A in Figur 3.

### Beschreibung der Ausführungsbeispiele

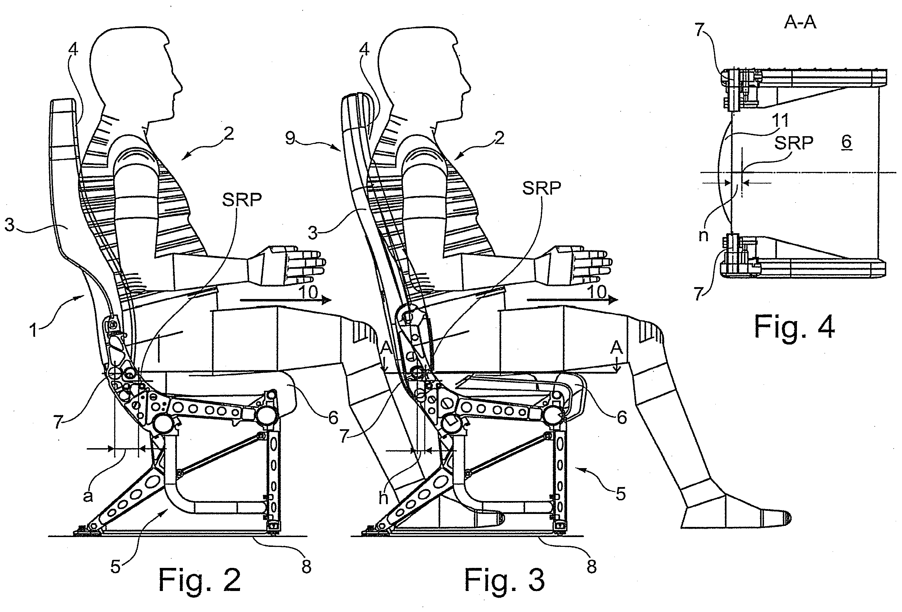

In Figur 2 ist ein aus dem Stand der Technik bekannter Fluggastsitz 1 mit einer darauf sitzenden Testperson 2 dargestellt.

Der Fluggastsitz 1 weist eine Rückenlehne 3 mit einem Rückenpolster 4 sowie ein Sitzgestell 5 mit einem Sitzpolster 6 auf.

Die Rückenlehne 3 ist über eine Drehachse 7 mit dem Sitzgestell verbunden. Hierbei handelt es sich bevorzugt um die maßgebliche Drehachse, um eine Rückenlehnentragstruktur in Bezug zum Sitzgestell verschwenken zu können.

Außerdem besitzt der Fluggastsitz 1 einen SRP der bezogen auf einen Flugzeugboden 8 in Flugrichtung 10 betrachtet um einen Abstand a vor der Drehachse 7 liegt.

Beim erfindungsgemäßen Sitz nach den Figuren 3 und 4 sind ähnliche Bauteile mit gleichen Bezugszeichen versehen.

Auf dem erfindungsgemäßen Fluggastsitz 9 sitzt ebenfalls eine Testperson 2.

Der Fluggastsitz 9 besitzt eine Rückenlehne 3 mit Rückenpolster 4 sowie ein Sitzgestell 5 mit Sitzpolster 6. Die Rückenlehne ist schwenkbar um die Drehachse 7 am Sitzgestell 5 angeordnet. Bei der Drehachse handelt es sich auch um die maßgebliche Drehachse zum Schwenken einer Rückenlehnentragstruktur in Bezug zum Sitzgestell. Die Struktur des Fluggastsitzes 9 aus Rückenlehne und Sitzgestell ist nun derart aufeinander abgestimmt, dass die Drehachse 7 zu einem SRP einen Abstand n aufweist, der geringer ist, als der Abstand a des Sitzes aus dem Stand der Technik. Hierbei handelt es sich wieder um einen Abstand parallel zum Flugkabinenboden 8 und in einer Flugrichtung 10 ausgerichtet.

Der Abstand a von SRP und Drehachse 7 in der bekannten Ausgestaltung eines Flugzeugsitzes 1 beträgt beispielsweise 60 mm. Der erfindungsgemäße Abstand liegt unter 40 mm, 30 mm, 20 mm, 10 mm oder 5 mm bzw. weist einen noch kleineren Wert auf.

In Figur 3 bzw. 4 beträgt der Abstand n beispielsweise etwas weniger als 5 mm. Durch die Verkleinerung des Abstandes zwischen Drehachse und SRP wird die Wölbung des Rückenpolsters bei unverändertem SRP größer, was den zusätzlichen Vorteil hat, dass ein Fluggast so wie in einem Art Schalensitz auch seitlich stärker unterstützt wird.

Der Raumgewinn im vorliegenden Beispiel beträgt ca. 55 mm, den ein Fluggast bis zum nächsten Sitz ausnutzen kann. Mit steigendem Raumangebot, was im Flugzeug auch als "living space" bezeichnet wird, steigt das Wohlbefinden eines Fluggastes während des Fluges.

Durch einen kleineren Abstand n von Drehachse 7 und SRP werden zudem Momente auf die Rückenlehne durch einen Fluggast verursacht kleiner, womit die Rückenlehne insgesamt leichter gebaut werden kann.

In Figur 4 sind die Drehachsen 7 in Draufsicht und der SRP neben einer angedeuteten Wölbung 11 des Sitzrückenposters ersichtlich.

### Bezugszeichenliste:

- 1: Fluggastsitz
- 2: Testperson
- 3: Rückenlehne
- 4: Rückenpolster
- 5: Sitzgestell
- 6: Sitzpolster
- 7: Drehachse
- 8: Flugzeugboden
- 9: Fluggastsitz
- 10: Flugrichtung
- 11: Wölbung

## Patentansprüche

1. Fluggastsitz (1, 9) mit einem Gestell (5), das zur Befestigung an einem Boden (8) einer Flugkabine vorgesehen ist und einer über eine Drehachse (7) am Gestell (5) schwenkbar gelagerten Rückenlehne (3), wobei der Sitz einen Sitz-Referenz-Punkt (SRP) aufweist, dessen Position nach dem SAE International Aerospace Standard AS8049 definiert ist, **dadurch gekennzeichnet, dass** die Drehachse (7) der Rückenlehne (3) in einer Linie parallel zum Kabinenboden und in Flugrichtung (10) betrachtet einen Abstand n von weniger als 40 mm vom Sitz-Referenz-Punkt (SRP) aufweist, für den Fall, dass die Drehachse (7) in Flugrichtung (10) betrachtet vor dem SRP liegt, und weniger als 5 mm vom Sitz-Referenz-Punkt (SRP) aufweist, für den Fall, dass die Drehachse (7) in Flugrichtung (10) betrachtet hinter dem SRP liegt.

2. Fluggastsitz nach Anspruch 1, **dadurch gekennzeichnet, dass** die Drehachse (7) durch den SRP geht.

3. Fluggastsitz nach einem der vorhergehenden Ansprüche, **dadurch gekennzeichnet, dass** die Drehachse auf gleicher Höhe mit dem SRP liegt.

4. Fluggastsitz nach einem der vorhergehenden Ansprüche, **dadurch gekennzeichnet, dass** eine Ausbuchtung der Rückenlehne (3) auf einer Ebene der Sitzfläche von einer seitlichen Berandung bis zur tiefsten Stelle mindestens 20 mm beträgt.

## Claims

1. Air passenger seat (1, 9) comprising a frame (5) which is provided for attaching to a floor (8) of an aircraft cabin and a backrest (3) which is mounted pivotably onto the frame (5) by means of a rotational axis (7), wherein the seat has a seat reference point (SRP), the position of which is defined according to the SAE International Aerospace Standard AS8049, **characterized in that** the rotational axis (7) of the backrest (3) has, in a line parallel to the cabin floor and as seen in the direction of flight (10), a distance n of less than 40 mm from the seat reference point (SRP), for the case where, as seen in the direction of flight (10), the rotational axis (7) is located in front of the SRP, and less than 5 mm from the seat reference point (SRP), for the case where, as seen in the direction of flight (10), the rotational axis (7) is located behind the SRP.

2. Air passenger seat according to Claim 1, **characterized in that** the rotational axis (7) passes through the SRP.

3. Air passenger seat according to either of the preceding claims, **characterized in that** the rotational axis is at the same height as the SRP.

4. Air passenger seat according to any one of the preceding claims, **characterized in that** a bulge in the backrest (3) on a plane of the seating surface from a side boundary to the deepest point is at least 20 mm.

## Revendications

1. Siège de passager d'avion (1, 9) avec un châssis (5) prévu pour la fixation sur un plancher (8) d'une cabine d'avion et un dossier (3) logé de façon pivotante par le biais d'un axe de rotation (7) sur le châssis (5), le siège ayant un point de référence de siège (SRP) dont la position est définie par le Standard Aerospace AS8049 de la société SAE International, **caractérisé en ce que** l'axe de rotation (7) du dossier (3), considéré sur une ligne parallèle au plancher de la cabine d'avion et dans la direction de vol (10), est à une distance n inférieure à 40 mm du point de référence de siège (SRP), pour le cas où l'axe de rotation (7), considéré dans la direction de vol (10), est situé devant le SRP, et est inférieure à 5 mm du point de référence de siège (SRP), pour le cas où l'axe de rotation (7), considéré dans la direction de vol (10), est situé derrière le SRP.

2. Siège de passager d'avion selon la revendication 1, **caractérisé en ce que** l'axe de rotation (7) passe à travers le SRP.

3. Siège de passager d'avion selon l'une des revendications précédentes, **caractérisé en ce que** l'axe de rotation se situe à la même hauteur que le SRP.

4. Siège de passager d'avion selon l'une des revendications précédentes, **caractérisé en ce qu'**une courbure du dossier (3), sur un plan de la surface d'assise, depuis un bord latéral jusqu'au point le plus profond, s'élève à au moins 20 mm.
